# EUROPEAN PATENT APPLICATION

(11) **EP 1 553 439 A1**
(43) Date of publication of application: **13.07.2005**
(21) Application number: 03792673.0
(22) Date of filing: 12.08.2003
(51) Int. Cl.: G02C 7/04, G02C 13/00, B29D 11/00

(54) **HYDRATING CASE FOR MOISTURE-CONTAINING CONTACT LENS AND HYDRATING METHOD USING IT**

(30) Priority: 12.08.2002 JP 2002234742
(71) Applicant: Menicon Co., Ltd., Nagoya-shi, Aichi-ken 460-0006 (JP)
(72) Inventor: NAKAGAWA, Makoto Tomey Corporation General Lab., Nagoya-shi, Aichi 451-0053 (JP)
(74) Representative: Nicholls, Michael John
(86) International application number: PCT/JP2003/010262
(87) International publication number: WO 2004/019114

(57) **Abstract**

The invention relates to a case for hydrating a moisture-containing contact lens in a dry condition, a hydrating device, and a hydrating method.

A case (2) comprises a plurality of grooves (8) provided in the inside face (6) of a recess (4). A lens is placed in the case, a proper amount of a hydrating liquid is poured along the inside wall face of the recess (4) in the case in a first step. Then in a second step, a hydrating liquid is poured into the recess from above the case to allow the contact lens (3) to absorb water and swell.

Accordingly, a wide extent of a lens front surface can come into contact evenly with the hydrating liquid in the first step, and the entire lens can be hydrated in the second step, whereby an efficient hydration is possible with lens curling and bubble entrapping prevented.

## Description

### TECHNICAL FIELD

The present invention relates to a hydrating case for a moisture-containing contact lens and to a hydrating method using the same, and more particular relates to a hydrating case for eluting unreacted monomer from a moisture-containing contact lens in a dry condition, and bringing the moisture-containing contact lens to an equilibrium swelled condition that is as uniform as possible, and to a hydrating method therefor.

### BACKGROUND ART

Typically, a moisture-containing contact lens is brought to finished product form by first fabricating a lens of the desired shape by various methods, and then subjecting it to a hydrating process and washing process in order to eliminate impurities such as unreacted monomer and the like. Treatment receptacles for carrying out such hydrating/washing processes are disclosed in JP-A-7-113990 and JP-A-4-227643, for example.

Specifically, the lens treatment receptacles taught in the publications cited hereinabove are formed so as to have a male chamber and a female chamber of an arrangement that can be assembled together in the vertical direction. With the male and female chambers assembled together, there is formed between the opposing faces a space capable of accommodating a lens. The male chamber is provided with a single filling port (disclosed as a washing conduit in the aforementioned publication) that, when assembled with the female chamber, allows the space accommodating the lens to be supplied with water for carrying out the lens hydrating/washing process. This port passes through the center portions of the opposing faces of the male chamber and female chamber in the vertical direction. A plurality of drain ports for draining the treatment water from the space are formed at equal intervals in the circumferential direction in the side wall extending vertically from the circumferential edge of the opposing face of the male chamber. With this treatment receptacle, the male and female chambers are assembled together, and in the space formed therebetween is accommodated a lens that has just been fabricated to predetermined lens shape. In this condition, the treatment water is supplied continuously to the space through the filling port of the male chamber in order to fill the space with the treatment water, so that the lens within the space is immersed in the treatment water and is induced to swell, to bring about hydration of the lens. The excess treatment water supplied to the space drains out from the plurality of drain ports, with the treatment water flowing through from the filling port to the plurality of drain ports so that the treatment water is induced to flow radially outward over the lens inside face and outside face from the center portions thereof, to effect washing of the lens.

With a treatment receptacle of this structure, it is necessary after completing the lens hydration process to transfer the lens to a case for commercial distribution. While a moisture-containing contact lens easy to handle mechanically prior to being hydrated with water, once hydrated it becomes soft, becoming susceptible to being damaged by even slight action during handling, and becoming difficult to handle mechanically. Accordingly, it is important to minimize handling of a moisture-containing contact lens to the greatest extent possible once the lens has been processed and formed. In particular, it is desirable to avoid handling that would involve direct contact with the lens in the hydrated state.

In order to address such problems, there is disclosed, for example, in JP-A-2002-221696 a technique wherein a commercial distribution case is used as the case for the hydrating process, and a moisture-containing contact lens in the dry state is housed within a housing recess provided in the hydrating process case. This case is brought into contact with hydrating process solution to hydrate and swell the lens, and is then washed in water flowing through. The hydrating process case is then sealed and used as the distribution case.

In a distribution case of conventional design such as that taught in JP-A-2002-221696, the inside face of the lens housing portion is typically made a smooth spherical concave face having curvature approximating that of the front surface of the contact lens, in order to avoid deformation of the contact lens during storage. However, moisture-containing contact lenses, due to their pliability, tend to become attracted onto such spherical concave faces, creating the problem of lens deformation, and difficulty in extracting the lens when removing it.

Further, it has been found by the inventors that when the hydrating method taught in JP-A-2002-221696 is followed, curling can occur during swelling of the moisture-containing contact lens in the dry state, and bubbles can become entrapped in curled portions, so that the moisture-containing contact lens floats in the treatment space in the case. Once air has been entrapped by a moisture-containing contact lens, it is subsequently very difficult to remove it from the moisture-containing contact lens, and if the moisture-containing contact lens floats, this poses the risk of impairing uniform water absorption and swelling, as well as of poor efficiency in elution of unreacted monomer.

### DISCLOSURE OF THE INVENTION

With the foregoing in view, it is an object of the present invention to provide a hydrating case of novel structure affording reduced curling and other non-uniform deformation of a moisture-containing contact lens during hydration of the moisture-containing contact lens, as well as enabling the hydrating process to be carried out in a consistent manner; and a novel hydrating method employing this hydrating case.

It is yet another object of the invention to provide hydrating case of novel structure affording reduced entrapment of bubbles during the moisture-containing contact lens hydrating process, whereby the moisture-containing contact lens can be induced to evenly absorb water and swell, and whereby unreacted monomer can be eluted efficiently; and a novel hydrating method employing this hydrating case.

To address such problems, as disclosed hereinbelow, the invention provides (I) a hydrating case for a moisture-containing contact lens, (II) a moisture-containing contact lens hydrating device employing the hydrating case, and (III) a moisture-containing contact lens hydrating method employing the hydrating case.

### (First Mode of the Invention Relating to a Hydrating Case)

The invention in a first mode thereof relating to a hydrating case is a hydrating case having a containment recess for containing therein a moisture-containing contact lens and used for bringing the moisture-containing contact lens in a dry state into contact with a hydrating liquid within the containment recess in order to absorb water and swell, said hydrating case being characterized in that an area of a concave inside face of the containment recess on which the moisture-containing contact lens rests is formed as a concave bowed face having a curvature generally equivalent to that of a front surface of the moisture-containing contact lens, and a depression that opens out onto the concave bowed face is formed in order to create a gap between the moisture-containing contact lens and the containment recess so that when the hydrating liquid flows down along the concave inside face, the hydrating liquid enters the gap.

In the hydrating case of structure according to this mode, since a depression is formed on the concave inside face forming the containment recess in which the moisture-containing contact lens is placed and contained, the area of contact between the moisture-containing contact lens and the concave inside face (concave bowed face) is minimized, and a gap can be formed between the moisture-containing contact lens and the containment recess. By means of hydrating liquid entering this gap, the entire front surface of the moisture-containing contact lens is readily contacted by the hydrating liquid, making it possible to improve the efficiency of elution of unreacted monomer and the like.

Additionally, in the hydrating case according to this mode, since a small gap is formed between the moisture-containing contact lens and the containment recess, capillary action of the hydrating liquid is exhibited by the gap by means of hydrating liquid flowing down along the concave inside face, making it possible for the hydrating liquid to advantageously enter between the moisture-containing contact lens and the containment recess. By means of causing the hydrating liquid to actively come into contact with the moisture-containing contact lens over a wide area of its front surface, it is possible to advantageously avoid curling and other types of irregular deformation during swelling of the moisture-containing contact lens, as well as improving efficiency of removal of unreacted monomer remaining inside the moisture-containing contact lens.

Further, in the hydrating case pertaining to this mode, since the concave bowed face per se has curvature generally equivalent to that of the front surface of the moisture-containing contact lens, in areas where depressions are not formed, the front surface of the moisture-containing contact lens is supported over a sufficiently large area by the concave bowed face. Therefore, for example, the moisture-containing contact lens can consistently hold its shape during the moisture-containing contact lens hydration/swelling process, and the moisture-containing contact lens can consistently hold its shape in the event of being stored for an extended period.

Additionally, by means of the depression formed therein, contact of the concave bowed face with the entire front surface of the moisture-containing contact lens can be avoided, whereby physical adhesion between the moisture-containing contact lens and the concave bowed face can be prevented, and free movement of the moisture-containing contact lens during hydration and during storage can be ensured. This arrangement improves the efficiency of water absorption/swelling and avoids lens deformation and the like, while making it easy for the moisture-containing contact lens to be removed from the hydrating case.

The number, shape and locations of depressions in this mode can be selected freely insofar as no deformation or other adverse effects are produced by supporting force on the moisture-containing contact lens positioned contained therein, and an adequate area of contact of hydrating liquid with the front surface of the moisture-containing contact lens can be assured, and insofar as such depressions are formable with a linear shape, spiral shape, serpentine shape, a shape having a geometrical pattern, or a shape combining portions of these shapes, for example. The depressions may be utilized to impart text, patterns, markings or the like to the container case, or to impart some design element to appeal to the taste of the user. Since the hydrating case is typically produced by injection molding of synthetic resin, employing of various shapes for the depressions can be accomplished readily by means of imparting the corresponding shape to the forming mold.

### (Second Mode of the Invention Relating to a Hydrating Case)

The invention in a second mode thereof relating to a hydrating case is a hydrating case according to the first mode, wherein the depression is formed in such a way that, when the moisture-containing contact lens is placed on the concave bowed face of the containment recess, the gap formed between the moisture-containing contact lens and the containment recess has a opening that opens to an outer peripheral side of the moisture-containing contact lens, and extends continuously diametrically inward from the opening.

In this mode, it is possible to advantageously induce the hydrating liquid flowing down the concave inside face to enter into the gap formed between the moisture-containing contact lens and the containment recess. With this arrangement, the hydrating liquid can be made to quickly enter the gap, so that the moisture-containing contact lens hydrating process may be carried out with a higher level of efficiency.

### (Third Mode of the Invention Relating to a Hydrating Case)

The invention in a third mode thereof relating to a hydrating case is a hydrating case according to the first or second mode, wherein the depression is formed by at least one groove.

In this mode, by establishing an appropriate pattern for the groove(s) which form the gap between the moisture-containing contact lens and the containment recess, it is possible to control the flow of hydrating liquid entering into the gap. Thus, it becomes possible, for example, to make the hydrating liquid contact more uniformly over a large area of the moisture-containing contact lens, or in the initial stage of contact with the hydrating liquid, to bring about hydration and swelling starting from a specific area of the moisture-containing contact lens. Also, by forming the depression with a groove form, the gap can exhibit a higher level of capillary action on the hydrating liquid, making it possible to accelerate entry of the hydrating liquid.

### (Fourth Mode of the Invention Relating to a Hydrating Case)

The invention in a fourth mode thereof relating to a hydrating case is a hydrating case according to the third mode, wherein at least one of the grooves is of a pattern extending generally in the circumferential direction of the concave bowed face.

In this mode, it is possible to guide the hydrating liquid generally uniformly and rapidly along the front surface of the moisture-containing contact lens and in particular in the circumferential direction thereof, so that when subjecting the moisture-containing contact lens to the hydrating process, it is possible to more advantageously hold down irregular deformation in the circumferential direction thereof. The groove(s) extending in the circumferential direction according to this mode is advantageously formed, for example, as a plurality of concentric annular grooves, or as one or an appropriate number of spiral grooves. The grooves extending in the circumferential direction may be given generally identical cross sectional shape and dimensions over the entire extension thereof, in order to avoid a situation where the hydrating liquid enters and flows easily only into a certain groove or grooves. Alternatively, by locating a plurality of grooves at generally equal intervals in diametrical cross section, or by gradually differentiating the spacing between the plurality of grooves or giving the plurality of grooves mutually different shapes, it is possible to adjust diffusion of the hydrating liquid.

### (Fifth Mode of the Invention Relating to a Hydrating Case)

The invention in a fifth mode thereof relating to a hydrating case is a hydrating case according to the third or fourth mode, wherein at least one of the grooves has a pattern extending in the generally diametrical direction of the concave bowed face.

In this mode, it is possible to guide the hydrating liquid generally uniformly and rapidly along the front surface of the moisture-containing contact lens and in particular in the diametrical direction thereof, so that when subjecting the moisture-containing contact lens to the hydrating process, it is possible to more advantageously hold down irregular deformation in the diametrical direction thereof. It is also possible to give a groove or grooves extending in the diametrical direction a shape that constricts gradually moving diametrically inward. Grooves extending in the diametrical direction need not be straight, but may instead be curved like the distal ends of the blades of a fan. Additionally, grooves extending in the diametrical direction pertaining to this mode may be combined with grooves extending in the circumferential direction pertaining to the fourth mode described previously. The two types of grooves are formed in a mutually intersecting pattern, whereby it is possible to guide the hydrating liquid more advantageously over a large area, in both the circumferential direction and diametrical direction at the front surface of the moisture-containing contact lens.

### (Sixth Mode of the Invention Relating to a Hydrating Case)

The invention in a sixth mode thereof relating to a hydrating case is a hydrating case according to any of the third to fifth modes, wherein a groove depth dimension is 0.05 mm or more where a groove width dimension is 1 mm or less, whereas the depth dimension is less than 0.05 mm where the groove width dimension is 3 mm or more.

### (Seventh Mode of the Invention Relating to a Hydrating Case)

The invention in a seventh mode thereof relating to a hydrating case is a hydrating case according to any of the first to sixth modes, wherein a ratio of an area: Ab occupied by the depression to a total area: Aa of the concave bowed face on which the moisture-containing contact lens rests, is such that 0.2 ≤ Ab/Aa ≤ 0.8.

According to the sixth mode and the seventh mode, good entry of hydrating liquid into the gap formed between the moisture-containing contact lens and the containment recess by the depression (including grooves) can be achieved, while holding down deformation of the moisture-containing contact lens caused by formation of the depression, so that the objective hydrating process can be carried out more rapidly and with a high degree of accuracy.

That is, while groove width dimension and depth dimension in the third mode etc. of the invention herein are not particularly limited, where groove width is large, it is preferable to make the groove shallow as well so that the moisture-containing contact lens does not enter the groove and become deformed. On the other hand, where groove width is narrow, since there is no risk of the moisture-containing contact lens entering the groove, it is preferable to make the groove deep in consideration of flow rate and ease of flow of the hydrating liquid, i.e. circulation of the hydrating liquid. In this sense, where groove width is 3 mm or more it is preferable for the groove to be shallower than 0.05 mm, and where groove width is narrow, i.e. 1 mm or les's, it is preferable for the groove to be 0.05 mm or more in depth.

Additionally, while the area ratio (Ab/Aa) of the concave bowed face of the depression (including the grooves of the third mode etc.) to the concave bowed face in the first mode etc. of the invention is not particularly limited, in preferred practice it will be on the order of 20 -80%, more preferably 50%. Namely, if the area ratio of the depression to the concave bowed face is too large, the support area provided by the concave bowed face supporting the moisture-containing contact lens through contact with the moisture-containing contact lens will become too small, and may end up promoting deformation of the moisture-containing contact lens, whereas if the area ratio of the depression to the concave bowed face is too small, the efficiency of contact of hydrating liquid with the front surface of the moisture-containing contact lens may be diminished.

### (Eighth Mode of the Invention Relating to a Hydrating Case)

The invention in an eighth mode thereof relating to a hydrating case is a hydrating case according to any of the first to seventh modes, wherein a center support portion having no grooves is formed in a center portion of the concave bowed face so that a center portion of the moisture-containing contact lens is superimposed over an entire face of the center support portion.

### (Ninth Mode of the Invention Relating to a Hydrating Case)

The invention in a ninth mode thereof relating to a hydrating case is a hydrating case according to any of the first to seventh modes wherein a center depression is formed in a center portion of the containment recess so that a lens center is supported floating above the containment recess by the center depression.

According to the eighth and ninth modes described hereinabove, the center portion of a moisture-containing contact lens of which accuracy in dimensions and shape are especially required to impart intended optical characteristics can be supported at the front surface thereof in a generally uniform manner by a center support portion (eighth mode) or float entirely above the case at the front surface thereof by means of a center depression (ninth mode). With this arrangement, localized stress in the center portion of the lens and warping resulting therefrom can be effectively prevented, so that the intended optical characteristics can be achieved more advantageously.

### (Tenth Mode of the Invention Relating to a Hydrating Case)

The invention in a tenth mode thereof relating to a hydrating case is a hydrating case according to any of the first to ninth modes wherein both the concave bowed face and a bottom face of the depression have smooth, generally mirrored surfaces.

In this mode, by manufacturing the hydrating case from transparent synthetic resin, it becomes possible to see the moisture-containing contact lens inside the containment recess, from outside the bottom of the hydrating case. This arrangement makes it possible, for example, to check if the moisture-containing contact lens is present in the sealed hydrating case without having to unseal the case, or to inspect the lens for damage or the like. During lens inspection, it is typical to employ a method of acquiring an image of the lens inside the hydrating case, distribution case, or other container case, and inspect the surface condition. As compared to the case where the concave bowed face of the container case is a semi-sphere having constant curvature, where grooves or other depressions are provided, contrast is intensified at the boundaries of the depressions, thus aiding in the discovery of any flaws in the lens.

### (Eleventh Mode of the Invention Relating to a Hydrating Case)

The invention in an eleventh mode thereof relating to a hydrating case is a hydrating case according to any of the first to tenth modes wherein a mating portion is formed in a rim of a mouth of the containment recess, and a cover is detachably attached by being mated with the mating portion.

In this mode, the containment recess that houses the moisture-containing contact lens may be readily covered by means of a cover, whereby by employing the twelfth or thirteenth mode hereinbelow, for example, it becomes possible to easily and advantageously prevent infiltration of foreign matter or bacteria into the containment recess during the, moisture-containing contact lens hydrating process or during distribution.

### (Twelfth Mode of the Invention Relating to a Hydrating Case)

The invention in a twelfth mode thereof relating to a hydrating case is a hydrating case according to the eleventh mode wherein the cover has a tube through-hole formed therein, and a supply tube for supplying the hydrating liquid to the containment recess is inserted through the tube through-hole so that with the containment recess covered by the cover the hydrating liquid is supplied to the containment recess through the supply tube.

In the hydrating case of structure according to this mode in particular, while making it possible to supply hydrating liquid to the containment recess during the hydrating process, it is possible as well to advantageous maintain the containment recess in a covered state. That is, it is possible in the hydrating process to carry out the hydrating process by pouring in and draining the hydrating liquid without covering the containment recess of the treatment case. However, in order to extract unreacted monomer from the moisture-containing contact lens, it is typical practice to repeat a procedure of letting the moisture-containing contact lens stand soaking in the hydrating liquid for several minutes or more, to allow time for unreacted monomer to elute from inside the moisture-containing contact lens, and then pouring in fresh hydrating liquid to effect liquid exchange within the containment recess. Therefore, if a cover is not used, during the repeated hydrating liquid filling/draining procedure, there is a risk that hydrating liquid will overflow to the outside, or that during the standing period the hydrating liquid filling the containment recess will become contaminated by foreign matter.

In the hydrating case of structure according to this mode, it is possible to cover the containment recess with a cover during the hydrating process, and to insert a guide tube (i.e. a supply tube for supplying hydrating liquid, or an additional drain tube for draining) through the tube through-hole provided in the cover, whereby hydrating liquid can be poured in through the guide tube, as well as draining out the hydrating liquid, making it possible to flow hydrating liquid through the containment recess interior, while maintaining the hydrating liquid in constant contact with the moisture-containing contact lens. This arrangement makes it possible to more efficiently and easily carry out the hydration process of the moisture-containing contact lens (including elimination of extracted unreacted monomer) while inside the containment recess. Since the containment recess is covered by the cover, contamination by foreign matter during the hydrating process interval can be prevented, and it is also possible to prevent hydrating liquid from overflowing to outside the hydrating case when the hydrating liquid is poured in, while at the same time completely filling the containment recess interior with hydrating liquid, so that contact of the hydrating liquid with the moisture-containing contact lens can be carried out more advantageously and consistently.

In this mode, as mentioned previously, during the standing period in which the moisture-containing contact lens is allowed to stand soaking in the hydrating liquid for a predetermined time period in order to allow time for unreacted monomer to elute from inside the moisture-containing contact lens, the tube may be withdrawn from the tube through-hole in the cover. At this time, since the mouth of the containment recess is constricted by the cover so that the area of the opening to the outside is small, contamination by foreign matter of hydrating liquid accumulated in the containment recess can be avoided.

In preferred practice, the portion of the guide tube situated inside the containment recess, i.e. the guide tube distal end (nozzle) for injecting the hydrating liquid will have a unitary tube structure, while comprising all injection ports and drain ports for supplying/draining all of the hydrating liquid. This arrangement makes it possible to form a single through-hole in the cover, whereby the guide tube arrangement is simpler than a structure incorporating a number of tubes, and contamination by foreign matter of the lens containment space interior through the through-hole in the cover can be effectively reduced.

In this mode, preferably a guide tube having an injection port for pouring in hydrating liquid and a drain port for draining the hydrating liquid is inserted through at least one through-hole provided in the cover, and the guide tube is affixed so as to hold the cover on the hydrating case. In this mode, since the guide tube is affixed so as to hold the cover on the hydrating case, it becomes possible to readily separate the guide tube and the cover after the hydrating liquid injection and draining process. By adopting such an mode, it is also possible to quickly carry out hydrating liquid injection and draining processes continuously in succession on hydrating cases of other subsequent lenses (with cover attached), whereby it is possible to incorporate it as a step in an automated mass production system. As a result, reductions in production costs can be advantageously achieved.

Further, in a mode of this kind, by holding down the guide tube for guiding the hydrating liquid into the containment recess from above a through-hole provided in the cover, the interior of the contact lens containment recess composed of the hydrating case, the cover, and the guide tube is provided with a hermetic structure. That is, a structure in which the containment recess formed between the opposing faces of the treatment case recess and the cover, and communicating with the outside through a through-hole in the cover, is rendered hermetic by means of inserting the guide tube through the through-hole, whereby during injection of hydrating liquid the containment recess interior can be filled with the hydrating liquid, without the hydrating liquid spilling out from the hydrating case. Accordingly, in preferred practice the hydrating case and the cover may each be fabricated of resin, whereby the force holding the guide tube and the repulsive force of the resin of the cover based thereon can be utilized to increase the hermetic seal of the containment space. The mode by which the guide tube is held down from above the through-hole provided in the cover includes a mode in which a guide tube of outer peripheral shape the same as or slightly larger than the through-hole is employed, the guide tube being forced into the through-hole so that the guide tube inserts through the through-hole with the outer peripheral surface thereof coming into substantially intimate contact with the inside rim of the through-hole around the entire circumference thereof.

### (Thirteenth Mode of the Invention Relating to a Hydrating Case)

The invention in a thirteenth mode thereof relating to a hydrating case is a hydrating case according to the eleventh or twelfth mode wherein the mouth of the containment recess is provided with a liquid tight closure by the cover so as to constitute a distribution case in which the moisture-containing contact lens is sealed within the containment recess in a state of being immersed in a distribution storage liquid.

In this mode in particular, the hydrating case for carrying out the hydrating process can be used as the distribution case, whereby without any direct contact, the hydrated contact lens can be shipped out and put into distribution channels, thereby avoiding problems such as damage or defects due to contact with the contact lens in the hydrated state. Additionally, in the hydrating case used in this mode, since the support face on which the front face of the moisture-containing contact lens rests has a concave bowed face with curvature equivalent to that of the front face of the moisture-containing contact lens, even if the lens is stored contained therein for an extended period of time, the problem of deformation of the moisture-containing contact lens can be avoided as much as possible. Additionally, since the concave bowed face has an appropriate depression formed thereon, there is no adhesion of the moisture-containing contact lens to the inside surface of the containment recess during storage or during shipping, as can occur with a curved surface simply having smooth curvature.

In the event that the hydrating case is used also as the distribution case, once injection and draining of the hydrating liquid have been repeated to sufficiently extract unreacted monomer from the lens, then finally filled with distribution storing liquid. In the case of a hydrating case of structure in accordance with the aforementioned twelfth mode for example, with the guide tube withdrawn from the cover and the cover attached or with the cover removed, the area surrounding the containment recess that contains the moisture-containing contact lens for which the hydrating process has been completed is covered with a sealing sheet (for example, a laminate of polypropylene or other suitable plastic film with aluminum foil; or a single pliable sheet composed of silicon oxide forming a barrier material having a plastic layer), and by means of subjecting the sealing sheet in the flat portions thereof extending around the containment recess to heat sealing or the like, forming a hermetic environment for the moisture-containing contact lens contained therein, whereby there can be produced as the completed product a blister case of the kind commonly offered for sale.

Where for example a hydrating case of structure in accordance with the aforementioned eleventh or twelfth mode has been sealed with the cover in place, by bonding the sealing sheet and the cover at least in part by means of heat, it becomes possible to remove the cover adhering to the sheet, at the same time that the sheet is peeled off, thereby simplifying the procedure to remove the lens, and allowing the case to be handled just like a conventional one sealed with a sheet only. Where the cover is thusly sealed together with the sealing sheet, whereas with blister cases of conventional type unintentional impact applied to the sealing sheet during the distribution process etc. could result in a hole in the sealing sheet or in the container losing its sterile condition, where the cover is thusly sealed together with the sealing sheet in this way, the reinforcing effect provided to the sealing sheet by the cover can advantageously prevent damage to the sealing sheet.

Further, in the event that a hydrating case of structure in accordance with the aforementioned twelfth mode doubles as the distribution case, in order to prevent the treatment case interior from becoming contaminated by foreign matter when the containment space with the exception of the guide tube is open, it is preferable for the through-holes formed in the cover to be few in number, and for the diameter thereof to be small as well.

### (First Mode of the Invention Relating to a Hydrating Device)

The invention in a first mode thereof relating to a hydrating device is a hydrating device employing the hydrating case defined in any one of the first to thirteenth modes of the invention relating to a hydrating case, for use to allow the moisture-containing contact lens in the dry state within the containment recess of the hydrating case to absorb water and swell, the hydrating device being characterized by comprising: a flow tube set bordering a mouth of the containment recess in the hydrating case; and a first injection port and a second injection port formed in the flow tube for supplying the hydrating liquid to the containment recess, the first injection port opening towards the concave inside face on a mouth side from the concave bowed face in the containment recess of the hydrating case, and the second injection port opening towards a back surface of the moisture-containing contact lens resting on the concave bowed face of the lens, wherein a supply of the hydrating liquid through the first injection port and a supply of the hydrating liquid through the second injection port are independently controllable.

### (Second Mode of the Invention Relating to a Hydrating Device)

The invention in a first mode thereof relating to a hydrating device is a hydrating device employing the hydrating case defined in any one of the first to thirteenth modes of the invention relating to a hydrating case, for use to allow the moisture-containing contact lens in the dry state within the containment recess of the hydrating case to absorb water and swell, the hydrating device being characterized by comprising: a flow tube set bordering the mouth of the containment recess in the hydrating case; and an injection port formed in the flow tube for supplying the hydrating liquid to the containment recess, the flow tube being inclined with respect to the hydrating case whereby an opening direction of the injection port is variable with respect to the containment recess, and being selectively positionable at either a first opening location at which the injection port opens towards the concave inside face on a mouth side from the concave bowed face in the containment recess of the hydrating case, and a second opening location at which the injection port opens towards a back surface of the moisture-containing contact lens resting on the concave bowed face of the lens.

In the hydrating device of structure according to the first or second mode of the invention, the flow of hydrating liquid emitted from the first injection port (first mode) or at the first opening location (second mode) is directed onto the concave inside face on the mouth side from the concave bowed face in the containment recess of the hydrating case so as to flow down the concave inside face, whereby it is guided into the gap between the containment recess and the moisture-containing contact lens being stored in the hydrating case. By means of the depression which forms the gap, the hydrating liquid advantageously enters over a sufficiently large area of the front surface of the moisture-containing contact lens, whereby the moisture-containing contact lens can be subjected to the hydrating process from the front surface thereof, and over a large area.

After the hydrating liquid has been emitted from the first injection port or the first opening location, the hydrating liquid emitted from the second injection port (first mode) or at the second opening location (second mode) is supplied to the hydrating case while being directed towards the upward-opening back surface of the moisture-containing contact lens housed in the hydrating case. With this arrangement, the moisture-containing contact lens can be restrained from floating up, while keeping the moisture-containing contact lens immersed within the containment recess of the hydrating case.

### (Third Mode of the Invention Relating to a Hydrating Device)

The invention in a first mode thereof relating to a hydrating device is a hydrating device of structure according to the first or second mode, wherein a drain port opening into the containment recess is formed in the flow tube, the hydrating liquid supplied to the containment recess being sucked out through the drain port in order to drain the liquid from the containment recess.

In the hydrating device of structure according to this mode, by draining the hydrating liquid through the drain port while supplying the hydrating liquid into the containment recess of the hydrating case through the injection port, liquid can be continuously circulate through the containment recess, whereby it is possible to more effectively carry out the hydrating process (including the process of extraction unreacted monomer and the like) of the moisture-containing contact lens contained placed within the containment recess.

As noted, in this mode, by carrying out injection of the hydrating liquid and draining of the hydrating liquid simultaneously, it is possible to create flow of hydrating liquid within the containment recess, i.e. agitation with the containment recess by means of the injected hydrating liquid, and carry out exchange of the hydrating liquid, while draining the processed hydrating liquid from the drain port; alternatively it would also be possible, after draining out from the drain port the hydrating liquid placed in the containment recess from the beginning, to then fill the containment recess with fresh hydrating liquid.

### (First Mode of the Invention Relating to a Hydrating Method)

The invention in a first mode thereof relating to a hydrating method is a hydrating method employing a hydrating case defined in any one of the first to thirteenth modes of the invention relating to a hydrating case, for use to allow the moisture-containing contact lens in the dry state, the moisture-containing contact lens hydrating method being characterized by comprising: (a) a first injection step wherein the moisture-containing contact lens in the dry state is placed in the containment recess of the hydrating case, and with the front surface of the moisture-containing contact lens resting supported on the concave bowed face, the hydrating liquid is supplied along the concave inside face on the mouth side from the concave bowed face in the containment recess, whereby the hydrating liquid is made to enter the gap formed between the moisture-containing contact lens and the containment recess by means of the depression; and (b) a second injection step wherein after the first injection step, the hydrating liquid is supplied towards the back surface of the moisture-containing contact lens contained within the containment recess, whereby the moisture-containing contact lens is immersed in the hydrating liquid within the containment recess.

According to the hydrating method of this mode, in the first injection step, the hydrating liquid is brought into contact with the front surface of the moisture-containing contact lens in the dry state, whereby the moisture-containing contact lens is hydrated and swelled from the front face. Since a depression has been formed in the concave bowed face which supports the front face of the moisture-containing contact lens, the hydrating liquid is advantageously and rapidly guided into contact with a large area of the lens front face by means of the gap formed by the depression. Thus, curling and other such non-uniform deformation of the moisture-containing contact lens due to hydration and swelling of the moisture-containing contact lens, as well associated entrainment of air bubbles, can be prevented, and the hydration/swelling process may be carried out in a consistent manner.

Additionally, since at the front surface of the moisture-containing contact lens there is formed a widening gap by the depression on the concave bowed face supporting it, the contact area of the moisture-containing contact lens and the hydrating liquid supplied in the first injection process can be made sufficiently large at the lens front surface, and the extraction efficiency of unreacted monomer and the like may be improved.

Further, once the moisture-containing contact lens has been hydrated and swelled from the front surface, by means of the second injection step, the moisture-containing contact lens immersed in the hydrating liquid which is poured into the containment recess from the back surface of the moisture-containing contact lens, whereby hydration and swelling of the entire moisture-containing contact lens can proceed while maintaining consistent shape of the moisture-containing contact lens, in a condition free of entrapped bubbles.

That is, when a moisture-containing contact lens in the dry state prior to being hydrated comes into contact with hydrating liquid, it will rapidly absorb liquid, and thus if the containment space containing the moisture-containing contact lens in the dry state suddenly begins to be filled with hydrating liquid, the contact lens may curl, and as the contact lens curls bubbles may become entrapped at the curled portions, so that the contact lens floats up within the containment space, posing the risk that uniform absorption and swelling by the contact lens will be hampered and that unreacted monomer will not be extracted efficiently. Additionally, it is typically difficult to separate air from a contact lens once entrapped. Thus, according to this mode, in the first injection step, the space between the concave bowed face and the front face of the dry moisture-containing contact lens is first primed with hydrating liquid; then in the second injection step, the containment space is filled with additional hydrating liquid from the back surface side of the moisture-containing contact lens, whereby the contact lens is held fixedly along the concave bowed face in the first injection step, while in the second step it is possible to avoid entrapment of bubbles and floating of the contact lens while filling the recess with the hydrating liquid.

### (Second Mode of the Invention Relating to a Hydrating Method)

The invention in a second mode thereof relating to a hydrating method is a hydrating method according to the first mode, wherein a hydrating liquid feed during the first injection step is 2 mL or less.

According to this mode, it is possible to avoid a situation in which injection of an excessive amount of hydrating liquid in the first injection step results in the hydrating liquid rising up onto the back surface of the moisture-containing contact lens, so that the shape stabilizing action afforded by a hydration/swelling process taking place from the front surface of the moisture-containing contact lens can be more effectively realized. That is, the amount of hydrating liquid introduced in the first hydrating step need simply be sufficient to lubricate the lens front surface and the treatment case concave bowed face and surrounding area, whereas introduction of a large amount creates the possibility of curling of the contact lens and entrapment of air bubbles. Thus, a small amount, preferably 2 mL or less and more preferably 1 mL or less, or depending on lens size and the shape of the depression in the concave bowed face, even 0.5 mL or less, will suffice. Once the first hydrating step has been completed, in the second hydrating step which is carried out after a brief interval, the hydrating liquid is added in an amount sufficient to maintain the moisture-containing contact lens completely immersed in the containment recess, preferably an amount sufficient to fill up the containment recess.

### (Third Mode of the Invention Relating to a Hydrating Method)

The invention in a third mode thereof relating to a hydrating method is a hydrating method according to the first or second mode, wherein after the second injection step, a flow step in which more hydrating liquid is supplied continuously to the containment recess while draining the excess hydrating liquid from the containment recess at the same time is performed.

According to this mode, it is possible to more efficiently eliminate unreacted monomer that is extracted from the surfaces of the moisture-containing contact lens by means of the first and second steps. When implementing the method of this mode, the hydrating case pertaining to the aforementioned twelfth mode of the invention relating to a hydrating case is advantageously employed, and the hydrating device pertaining to any of the first to third modes relating to a hydrating device is advantageously employed.

### (Fourth Mode of the Invention Relating to a Hydrating Method)

The invention in a fourth mode thereof relating to a hydrating method is a hydrating method according to the third mode, wherein in the flow step, the flow rate produced through the containment recess by means of supplying and draining the hydrating liquid is varied in stepwise fashion.

According to this mode, it is possible to more effectively bring about extraction of unreacted monomer from the moisture-containing contact lens and elimination of dust etc. adhering to contact lens surfaces, by taking into consideration temporal change in the level of extraction of unreacted monomer.

Where a hydrating process is carried out according the method of the invention pertaining to any of the first to fourth modes described hereinabove, in the event that using the hydrating case pertaining to the aforementioned thirteenth mode relating to a hydrating case, the hydrating case is to be used as the distribution case, the lens case will typically be manufactured by injection molding. By lacing the finished moisture-containing contact lens in the dry state just after molding, into the containment recess and covering it with a cover or the like as described previously, it is possible to largely eliminate contamination by dust or the like infiltrating into the containment recess. Still more favorably, better effect in improving product quality can be achieved by carrying out the hydration process steps, including the procedure for placing the moisture-containing contact lens in the containment recess, entirely within a clean area.

### BRIEF DESCRIPTION OF THE DRAWINGS

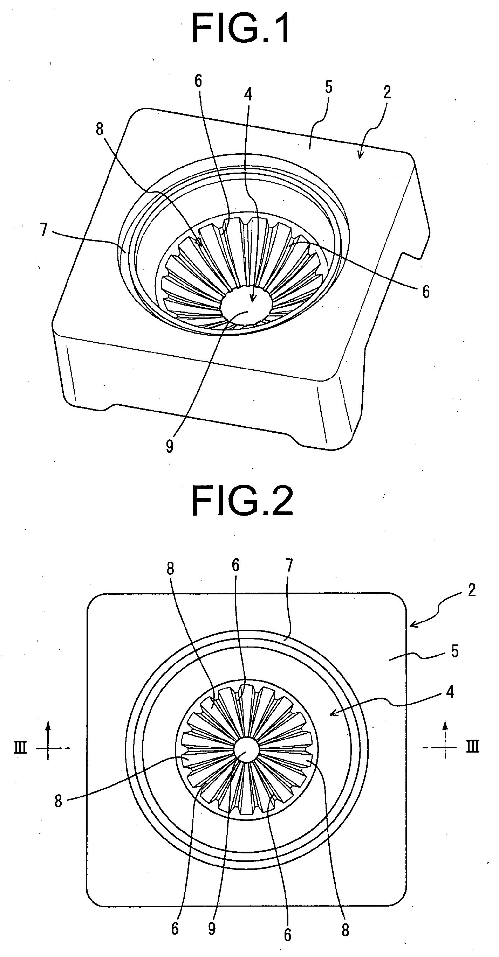

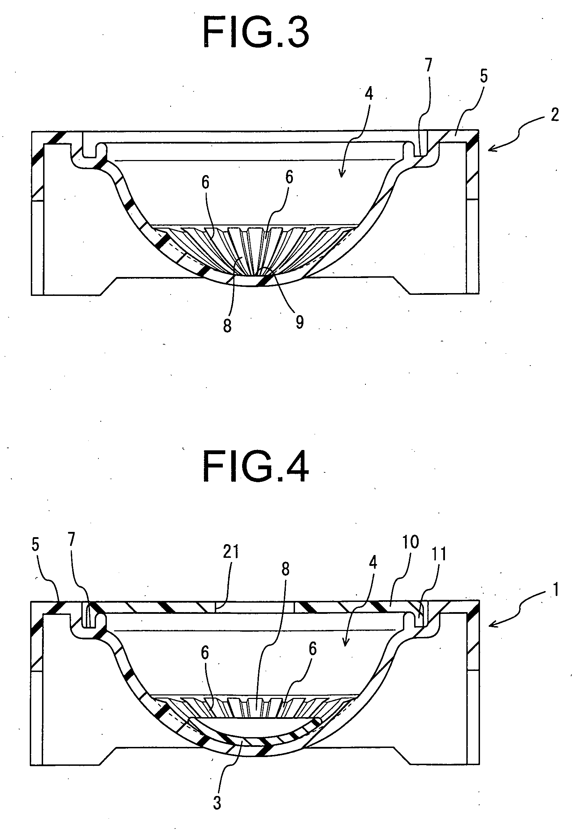

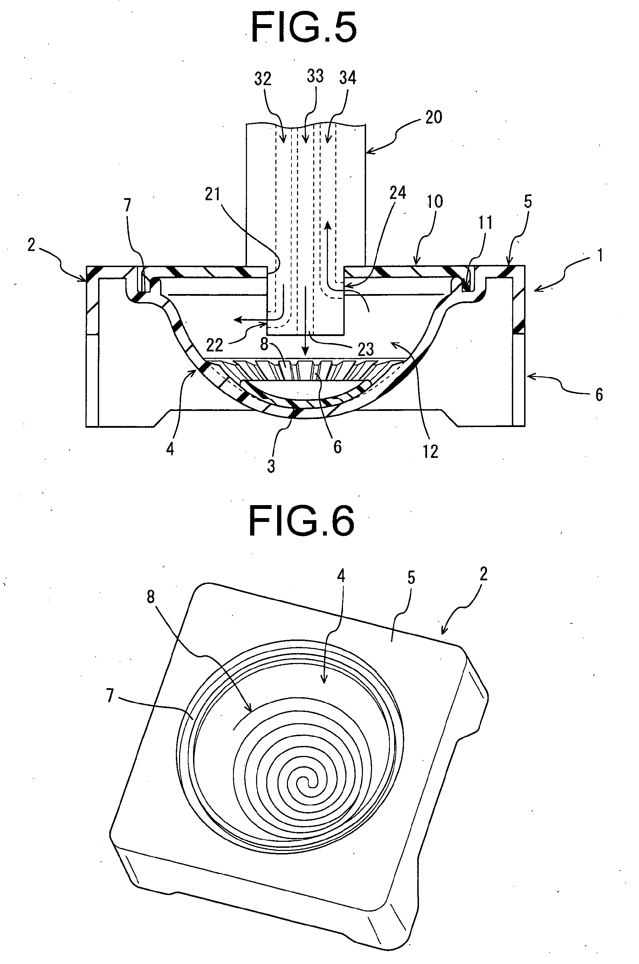

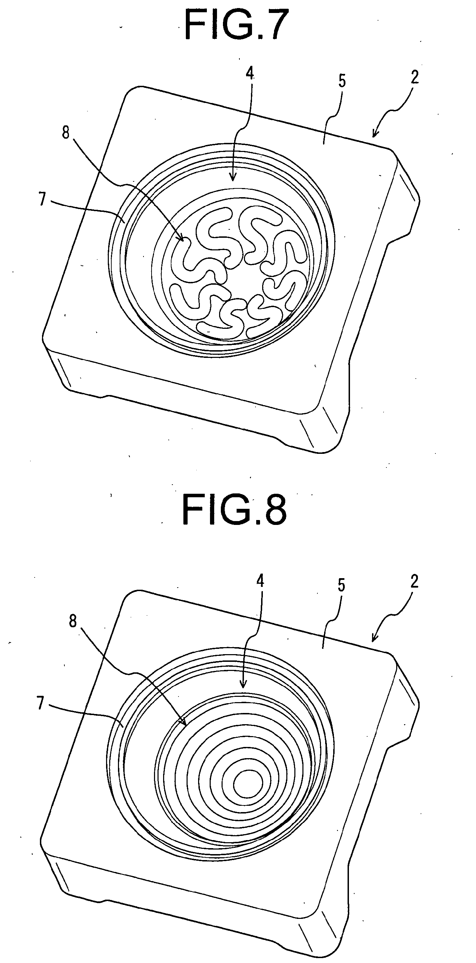

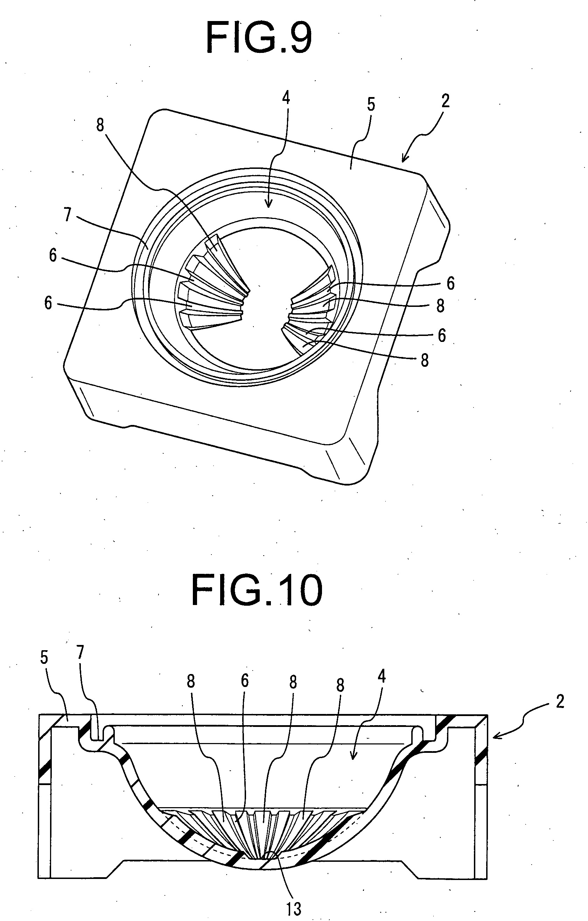

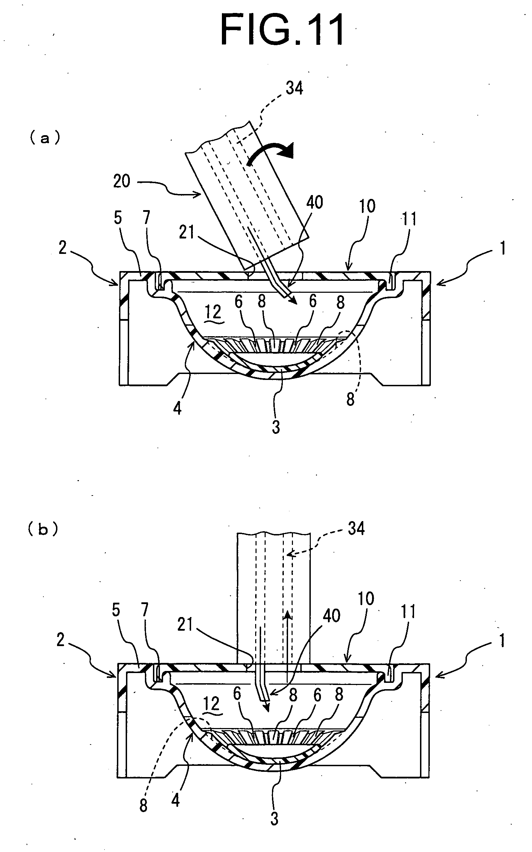

FIG. 1 is a perspective view of the hydrating case as a first embodiment of the invention. FIG. 2 is a plan view of the hydrating case shown in FIG. 1. FIG. 3 is a sectional view taken along line III-III in FIG. 2. FIG. 4 is a sectional view of the treatment case employed in the hydrating method of the invention. FIG. 5 is an illustration of implementation of the hydrating method of the invention. FIG. 6 is a perspective view showing another embodiment of the hydrating case of the invention. FIG. 7 is a perspective view showing another embodiment of the hydrating case of the invention. FIG. 8 is a perspective view showing another embodiment of the hydrating case of the invention. FIG. 9 is a perspective view showing another embodiment of the hydrating case of the invention. FIG. 10 is a perspective view showing another embodiment of the hydrating case of the invention. FIG. 11 is a perspective view showing another embodiment of the hydrating method of the invention.

### BEST MODE FOR CARRYING OUT THE INVENTION

In order to illustrate the invention more concretely, the embodiments of the invention are described in detail hereinbelow, making reference to the accompanying drawings.

A treatment case 2 for a moisture-containing contact lens is shown in FIG. 1 to FIG. 3 by way of a first embodiment of the invention. This case 2 has a recess 4 as a containment recess for containing the moisture-containing contact lens (3). In the description hereinbelow, as a general rule, the vertical direction in FIG. 3 shall be deemed the vertical direction.

More specifically, the case 2 structure has a rectangular top panel 5, and four leg portions extending integrally in the thickness direction of the top panel 5, i.e. downward, from the four corners of the top panel 5. In this embodiment, the top panel 5 has a square shape overall. In the generally central portion of the top panel 5 is formed a recess 4 that opens in the other the thickness direction of the top panel 5, i.e. upward. This recess 4 has a circular mouth, giving it an overall shape resembling half of a hollow sphere. A circumferential groove 7 is formed around the entire circumference of the rim of the mouth of the recess 4, as a mating portion.

In this embodiment, the recess 4 formed in the case 2 has a mouth whose diameter dimension is of a size such that the moisture-containing contact lens (3) can be readily placed in and removed through the mouth, specifically, a size greater than the diameter of the contact lens (3), but less than twice the diameter of the contact lens (3). The depth dimension of the recess 4 is a depth dimension such that the contact lens (3) immersed in the hydrating liquid can be accommodated together with the hydrating liquid used to carry out the hydration and washing processes of the contact lens (3), specifically, smaller than the diameter of the contact lens (3), but greater than the radius of the contact lens (3).

The concave inside face of the recess 4, in an area on the bottom side of the recess 4, has a concave bowed face 6 of curvature generally equivalent to that of the contact lens (3), in particular the front surface of the moisture-containing contact lens (3). With this arrangement, the concave bowed face 6 has curvature greater than the outside face curvature of the contact lens (3) in the dry state, so that the contact lens (3) in the hydrated state will not be subjected to excessive outside force. In particular, in this embodiment, curvature differs between the portion on the bottom side and the portion on the mouth side, thereby forming a shoulder at the boundary of the bottom side portion and the mouth side portion, i.e., the portion having the concave bowed face 6 formed thereon, and the portion not.

In this way, a plurality of grooves 8 are formed as depressions in the recess 4. This plurality of grooves 8 extend linearly from the rim of the recess 4 to the center of the recess 4, i.e. to the center portion on the bottom of the recess 4, and are formed at equidistant intervals about the circumference of the recess 4. That is, the plurality of grooves 8 are formed radially from the center of the bottom of the recess 4 to the rim of the recess 4, at spacing that is equidistant in the circumferential direction. Accordingly, in this embodiment, the plurality of grooves 8 are formed so as to open onto the concave bowed face 6, so that no grooves are formed on the mouth rim side of the recess 4. Also, in this embodiment, the groove 8 bottom faces and the concave inside face have the same curvature with each other. Also, the grooves 8 are formed extending in the diametrical direction with mutually identical cross sections, and in this embodiment the width dimension thereof constricts gradually going from the mouth rim side to the center portion of the bottom, with the depth dimension decreasing as well. In this embodiment, the center portion of the bottom of the recess 4, i.e. the center portion of the concave bowed face 6, has no grooves formed thereon. This center portion of the concave bowed face 6 devoid of grooves constitutes a central support portion 9. By forming a plurality of grooves 8 on the concave bowed face 6, with the front face, i.e. the convex side, of the contact lens (3) resting on the concave bowed face 6, a gap is formed between the contact lens (3) and the recess 4, whereby the contact area between the concave bowed face 6 and the contact lens (3) may be adjusted. With the contact lens (3) positioned with its front face side resting on the concave bowed face 6, the gap formed between the contact lens (3) and the recess 4 opens to the outside peripheral side of the contact lens (3), with the hydrating liquid entering through this opening.

The groove 8 surfaces, i.e. the groove 8 bottom faces, do not come into direct contact with the contact lens (3), and for this reason can be irregular surfaces. However, in consideration of the fact that the contact lens (3) will be inspected while placed in the case 2, flat surfaces or mirror-finish surfaces are preferred. On the other hand, since in locations other than where the grooves 8 are formed the concave bowed face 6 comes into direct contact with the contact lens (3), a smooth surface is preferred in order to avoid damaging the contact lens (3). In particular, in this embodiment, the concave bowed face 6, in portions thereof where the plurality of grooves 8 are not formed, is formed overall as a convex surface having curvature approximating the curvature of the entire face of the contact lens (3).

In order to be inexpensive and easy to handle, the case 2 of this structure can be formed of thermoplastic plastic selected appropriately, for example, from polyethylene, polypropylene, ethylene vinyl acetate, propylene copolymer, polystyrene, nylon or the like, and molded by means of an injection molding or thermocompression molding process.

The hydrating method using this treatment case 2 will now be described. This hydrating method is carried out using a treatment container 1 like that shown in FIG. 4, the treatment container 1 being compose of the treatment case 2, and a cover 10 for attaching to the treatment case 2. This cover 10 is formed of synthetic resin material, and overall has a shape slightly larger than the mouth of the recess 4 that is provided in the case 2. In this embodiment in particular, the cover 10 has a disk shape overall. The cover 10 in the center portion thereof has formed a single through hole 21 serving as a tube insertion hole, and at the outside peripheral edge has a ridge 11 extending continuously all the way around the circumference in the circumferential direction.

This cover 10 is attached to the case 2 in such a way as to cover the mouth of the recess in the case 2. With the cover 10 attached to the case 2 in this way, the ridge 11 of the cover 10 mates with the circumferential groove 7. By so doing, there is formed between the opposing faces of the cover 10 and the recess 4 a containment space 12 for containing the contact lens 3 positioned therein, the containment space 12 being connected to the outside space exclusively through the through hole 21 provided in the cover 10. Attachment of the cover 20 to the case 2 is carried out with the contact lens 3 contained within the recess 4.

Next, as shown in FIG. 5, a guide tube 20 serving as a supply tube (flow tube) is attached to the cover 10 making up the treatment container 1. This guide tube 20 has a structure comprising two injection-end passages 32, 33 and a single drain-end passage 34. The distal end of the guide tube 20 forms an injection nozzle having two injection ports 22, 23 for injecting into the containment space 12 the hydrating liquid flowing through the injection-end passages 32, 33, and a drain port 24 for draining through the drain-end passage 34 the hydrating liquid that has been injected into the containment space 12. In this embodiment, the injection port 22 opens out at the distal end portion of the guide tube 20, i.e. the cylindrical outside peripheral surface of the injection nozzle, whereas the injection port 23 opens at the projecting distal end face of the injection nozzle. In this embodiment, the drain port 24 opens out onto the cylindrical outside peripheral surface of the injection nozzle. Further, in this embodiment, the injection nozzle is smaller in diameter than the main body portion of the guide tube 20, thereby forming an annular shoulder face at the boundary of the injection nozzle and the main body portion. As will be apparent from the previous description, in this embodiment, the injection port 22 constitutes the first injection port, and the injection port 23 constitutes the second injection port.

While not shown clearly in the drawings, the guide tube 20 is also connected to an injection pump for injecting the hydrating liquid into the containment space 12 through the injection-end passages 32, 33; an injection-end tank for storing the hydrating liquid which will be injected into the containment space 12; and a drain-end tank for storing the hydrating liquid which has been drained out through the drain-end passage 34. If necessary, there may also be provided a suction pump for draining out through the drain-end passage 34 the hydrating liquid injected into the containment space 12. The injection pump and the suction pump are controlled by means of a control unit. As will be apparent from the above, in this embodiment, the hydrating device arrangement includes the guide tube 20, the tanks and pumps connected to the guide tube 20, and the control unit for controlling the pumps.

The guide tube 20 is attached to the cover 10 by inserting the injection nozzle of the guide tube 20 through the through-hole 21. During this process, by causing the guide tube 20 to be detained on the cover 10, specifically, by pushing the guide tube 20 so that the annular shoulder face formed at the boundary of the injection nozzle and the main body portion becomes detained outside (above in the drawing) the outside face of the cover 10 surrounding the through-hole 21, the guide tube 20 and the cover 10 are placed in intimate contact. Thus, the through-hole 21 is sealed off in fluid-tight fashion, and the ridge 11 of the cover 10 mates with the circumferential groove 7 of the case 2 ensuring that the containment space 12 is fluid tight, whereby the containment space 12 becomes a space hermetically sealed off from the outside. In this case, the pressure at which the guide tube 20 is detained on the cover 10 can be a level of pressure sufficient to prevent the hydrating liquid from leaking out from the containment space 12 when the hydrating liquid is injected into the containment space 12. During this time, it is preferable that the air already present within the containment space 12 be removed quickly. Specifically, by way of example, an air bleed hole could be provided to the injection nozzle, or an air bleed gap of a size such that hydrating liquid leakage is negligible could be formed between the cover 10 and the guide tube 20, for example.

Next, a first hydration process step is carried out by way of a first injection step for injecting an aqueous treatment liquid from the injection port 22 through one of the injection-end passages 32 of the guide tube 20. This aqueous treatment liquid may be selected appropriately from, for example, deionized water, aqueous solution containing surfactant, physiological saline, or other liquid used conventionally for moisture-containing contact lens hydrating processes and cleaning processes. In the first hydration process step, the hydrating liquid is injecting in from the injection port 22 towards the side wall of the recess 4 in the case 2, i.e. towards the side wall in proximity to the edge of the mouth of the recess, whereupon the injected hydrating liquid flows down along the concave inside face to the bottom end of the recess 4, i.e. the area where the contact lens 3 is located. From the area surrounding the contact lens 3, the hydrating liquid then primes the gap between the contact lens 3 and the wall surface at the bottom end of the recess 4, to bring about preliminary hydration of the contact lens 3. With this arrangement, the contact lens 3 is appropriately attracted on the curved face of the recess 4, and hydrated.

Subsequently, after a predetermined time interval (for example, several seconds to several tens of seconds), a second hydration process step is carried out by way of a second injection step for injecting the hydrating liquid from the injection port 23 through the other injection-end passage 33 of the guide tube 20. The hydrating liquid injected in this second hydration process step is the same as that injected in the first hydration process step. The hydrating liquid is injected from the injection port 23 towards the back surface of the contact lens 3, and once the containment space 12 has become filled with the hydrating liquid, the contact lens 3 is immersed therein for an appropriate period of time, to extract unreacted monomer remaining in the contact lens 3. Next, a circulation step in which fresh hydrating liquid is injected into the containment space 12 through the two injection-end passages 32, 33, while draining out the hydrating liquid overflow from the drain port 24 through the drain-end passage 34 to drain it from the containment space 12 is carried out.

Here, switching between the injection-end passages 32, 33 when injecting the hydrating liquid in the manner described above can be accomplished, for example, in a case in which an injection tank and pump are connected to each injection-end passage, turning the power supply to each pump on and off. Alternatively in a case in which the injection-end passage are furnished with a shared injection tank and pump, disposing a changeover valve for switching between the injection-end passages 32, 33 on the line connecting the pump to the injection-end passages 32, 33, and operating this changeover valve. By means of employing such an arrangement, the supply of hydrating liquid through the injection port 22 and the supply of hydrating liquid through the injection port 23 are controllable independently.

In the hydrating process described above, the flow rate of hydrating liquid within the containment space 12 is preferably on the order of several cc/sec to several tens of cc/sec. The temperature of the hydrating liquid is preferably on the order of 20 -80°C. Further, the exchange interval of the hydrating liquid is preferably from several minutes to several tens of minutes. The injection of warm water effectively eliminates unreacted monomer from within the contact lens 3.

By carrying out hydrating liquid flow rate or injection in a multi-stepwise manner, efficiency of the cleaning and hydration process of the contact lens 3 can be improved. For example, when transitioning from a dry state to a hydrated state during initial injection, since the contact lens 3 becomes swelled and larger in size, its shape tend to become unstable. If the flow rate at this time is too high there is a risk of deformation of the contact lens 3 obtained subsequently. Therefore, the initial flow rate should be kept fairly low, with the second and subsequent fill-ups of hydrating liquid conversely taking place at faster flow rates so that the internal solution, i.e. the hydrating liquid within the containment space 12, is agitated and the efficiency of exchange is increased. At the point in time that the hydration state is thought to reach equilibrium, fresh hydrating liquid is brought into contact with the contact lens 3 at a higher flow rate, in order to promote elution of unreacted monomer and the like extracted from the contact lens 3. The interval for hydrating liquid exchange is carried out at relatively brief intervals initially due to the large amount of unreacted monomer that is extracted, with the exchange interval gradually increasing thereafter, to improve the efficiency of utilization of the hydrating liquid.

Further, there is no need for the guide tube 20 to be connected continuously to the containment space 12 until the contact lens 3 processing is completed; rather, the guide tube 20 may be used efficiently by connecting the guide tube to another treatment container during the time interval that the contact lens 3 is simply being immersed.

When the hydration process is complete, in the final circulation process, a contact lens 3 storage solution is injected into the containment space 12, and the guide tube 20 is withdrawn. Then, with the cover 10 still in place or removed, the top panel 5 of the case is covered with a sealing sheet, and then heat sealed to make the recess 4 into a hermetic space.

In this way, in the present embodiment the contact lens 3 case 2 serves as both the treatment case and the distribution case, and thus there is no direct mechanical contact with the contact lens 3 in the hydrated state, so that damage or other defects of the lens 3 can be effectively prevented. The treatment case 2 sealed in this way may optionally be subjected to a sterilization process, to appropriate packaging, imprinting and the like, and then sent to the distribution process.

In order to impart good adhesion by means of heat sealing or adhesive, the sealing sheet which is sealed after processing of the contact lens 3 is finished will preferably consist of material composed of a laminate of polyethylene, polypropylene or other material similar to the material of the treatment case, having a layer of aluminum foil on the surface; or another material composed of silicon oxide forming a barrier material having a plastic layer.

In the hydrating method according to this embodiment, the hydrating process is carried out using a treatment case 2 that has a plurality of grooves 8 formed on the concave bowed face 6, and thus it is possible to adjust the surface of the recess 4, in particular the contact area between the concave bowed face 6 and the contact lens 3, whereby the hydrating liquid can be induced to spread over the entire lens while permitting freer movement of the contact lens 3. Thus, the contact lens 3 in the dry state is able to absorb liquid over its entirety, thereby promoting uniform swelling and avoiding deformation of lens shape, which tends to become irregular if there is sudden absorption during the initial phase of the hydration process.

Also, in this embodiment, since grooves are disposed uniformly/evenly over substantially the entire surface of the concave bowed face in the recess 4, deformation of the contact lens 3 during lens hydration and storage may be effectively prevented.

Further, in this embodiment, the concave bowed face 6 in the recess 4, considered apart from those portions where the grooves 8 are located, forms overall a concave face having curvature similar to the overall curvature of the contact lens 3, so that when employed as the distribution case, the contact lens 3 is not subjected to excessive stress during storage for an extended period, so that deformation of the contact lens 3 can be advantageously prevented.

Also, in this embodiment, since the depth of the recess 4 can be adjusted appropriately, the contact lens 3 will not rotate during transport.

Further, in this embodiment, since a plurality of grooves 8 are formed on the concave bowed face 6, it is possible to prevent physical adhesion of the contact lens 3 to the concave bowed face, to assure free movement of the contact lens 3 during hydration, storage, and transport, and to avoid deformation of the contact lens 3.

Also, in this embodiment, by carrying out initial filling in two stages, as compared to the case of filling the contact lens 3 with hydrating liquid from above from the outset, it is possible to carry out filling without bubbles adhering to the contact lens 3 and without curling of the contact lens 3.

While certain specific arrangements of invention have been shown hereinabove, these are merely exemplary, the invention being in no way limited to the disclosure hereinabove.

For example, whereas in the preceding embodiment the plurality of grooves 8 are formed radially, they could instead have shapes such as those depicted in FIG. 6 to FIG. 9. The grooves 8 shown in FIG. 6 are formed in spiral shape. The grooves 8 shown in FIG. 7 are formed in serpentine shape, with the grooves 8 extending in the generally circumferential direction. The grooves 8 shown in FIG. 8 are formed as multiple annular grooves. That is, the grooves 8 shown in FIG. 8 are each formed extending in the circumferential direction. Those shown in FIG. 9 have formed portions of the straight grooves 8 shown in FIG. 1. These groove configurations are merely exemplary; provided that the hydrating process can be carried out with efficiency, various configurations which combine these or are formed from portions thereof are possible as well. These grooves may also form part of a pattern.

In the embodiment hereinabove, the contact lens 3, when placed inside the recess 4, is disposed with center portion of the front surface in contact with the portion of the concave bowed face 6 devoid of grooves 8, i.e. the center support portion 9. However, it could instead not contact the recess 4, as shown in FIG. 10.

Specifically, whereas in the embodiment hereinabove, each groove 8 has decreasing depth dimension going towards the bottom of the recess 4, with no grooves 8 being formed in the center portion of the bottom of the recess 4 and the center portion of the contact lens 3 front surface contacting the bottom of the recess 4, in the embodiment shown in FIG. 10, the grooves 8 have unchanging depth dimension going towards the bottom of the recess 4, being formed as if the side wall portions of the grooves 8 are cut off. The contact lens 3 comes into contact exclusively with the upper faces of the groove 8 side wall portions, whereby with the contact lens 3 placed within the recess 4, the center portion of the contact lens 3 front surface does not contact the recess 4. As will be apparent from the above, in the embodiment depicted in FIG. 10, a central depression 13 is formed in the center portion of the bottom of the recess 4. To aid in understanding, components and regions similar in structure to those in the first embodiment are assigned the same symbols as in the first embodiment.

In the embodiment hereinabove, there was described a treatment method employed in the case where the cover 10 has a single through-hole 21. However, where treatment is carried using for example, both the guide tube having injection ports 22, 23 and passages 32, 33 communicating therewith, and the guide tube having the drain port 24 and the passage 34 communicating therewith, a cover with two through-holes would be acceptable; or even where only a single through-hole is provided, the process could be carried out by alternately coupling the guide tubes to the cover.

Further, the concave bowed face 6 having curvature generally equivalent to that of the front face of the moisture-containing contact lens will preferably support the center portion of the contact lens 3 front face abutting it over a sufficiently large area, whereby deformation of the moisture-containing contact lens can be prevented more advantageously. The outside peripheral edge portion of the moisture-containing contact lens, on the other hand, may float up to some extent from the concave bowed face 6. By means of this, entry of the hydrating liquid from the gap onto the front face of the moisture-containing contact lens is promoted. An embodiment wherein the outside peripheral edge portion of the moisture-containing contact lens floats slightly above the concave bowed face 6 of the moisture-containing contact lens in this manner also falls within the scope of generally equivalent curvature, and represents one mode of embodiment of the invention.

In FIG. 11 is shown another example wherein a single injection tube is used in the first injection step which is the first stage, as the injection port in order to spray the hydrating liquid towards the concave inside face constituting the concave surface side wall, and in the second injection step which is the second stage, to introduce hydrating liquid directed in the direction of the lens. In this example, the single injection tube 40 projects from the guide tube 20 serving as the flow tube. In order to change the spray direction of the hydrating liquid from the single injection tube 40, the angle at which the injection tube 40 is inserted into the through-hole 21 of the cover 10 is varied between a first stage (shown in FIG. 11(a)) and a second stage (shown in FIG. 11(b)). The projecting distal end portion of the injection tube 40 is curved appropriately so that in the first injection step, the angle at which the injection tube 40 inserts into the through-hole 21 of the cover 10, i.e. the angle of slope of the guide tube 20 with respect to the perpendicular to the upper face of the cover 10, is not excessive, and so that in the second injection step, the hydrating liquid can be introduced in the direction of the lens. As will be apparent from the preceding description, the location of the opening of the injection tube 40 in the first stage is the first opening location, whereas the location of the opening of the injection tube 40 in the second stage is the second opening location. An advantage of this method is that since a single injection tube suffices, the number of pumps connected thereto can be reduced, as can the number of conduit pipes connecting to the injection tube, thereby providing reductions in terms of equipment and costs, and greater simplicity in spatial arrangement.

In FIG. 5 and FIG. 11 are shown examples where the cover is provided with one or two through-holes; however, it would be possible to provide three or more through-holes, and for the locations of the through-holes to be eccentric from the center. Further, the shape and size of the recess 4 and the top panel 5 may be modified appropriately.

As set forth hereinabove, in the moisture-containing contact lens case according to the invention and the hydrating method employing it, as well as in the hydrating device of structure according to the invention, curling of the contact lens and entrapment of air bubbles may be avoided, while making it possible to advantageously carry out hydration of the contact lens.

## Claims

1. A hydrating case having a containment recess for containing therein a moisture-containing contact lens and used for bringing the moisture-containing contact lens in a dry state into contact with a hydrating liquid within the containment recess in order to absorb water and swell, the hydrating case being **characterized in that** an area of a concave inside face of the containment recess on which the moisture-containing contact lens rests is formed as a concave bowed face having a curvature generally equivalent to that of a front surface of the moisture-containing contact lens, and a depression that opens out onto the concave bowed face is formed in order to create a gap between the moisture-containing contact lens and the containment recess so that when the hydrating liquid flows down along the concave inside face, the hydrating liquid enters the gap.

2. A hydrating case according to claim 1, wherein the depression is formed in such a way that, when the moisture-containing contact lens is placed on the concave bowed face of the containment recess, the gap formed between the moisture-containing contact lens and the containment recess has a opening that opens to an outer peripheral side of the moisture-containing contact lens, and extends continuously diametrically inward from the opening.

3. A hydrating case according to claim 1 or 2, wherein the depression is formed by at least one groove.

4. A hydrating case according to claim 3, wherein at least one of the grooves is of a pattern extending generally in the circumferential direction of the concave bowed face.

5. A hydrating case according to claim 3 or 4, wherein at least one of the grooves has a pattern extending in the generally diametrical direction of the concave bowed face.

6. A hydrating case according to any one of claims 1-5, wherein a groove depth dimension is 0.05 mm or more where a groove width dimension is 1 mm or less, whereas the depth dimension is less than 0.05 mm where the groove width dimension is 3 mm or more.

7. A hydrating case according to any one of claims 1-6, wherein a ratio of an area: Ab occupied by the depression to a total area: Aa of the concave bowed face on which the moisture-containing contact lens rests, is such that 0.2 ≤ Ab/Aa ≤ 0.8.

8. A hydrating case according to any one of claims 1-7, wherein a center support portion having no grooves is formed in a center portion of the concave bowed face so that a center portion of the moisture-containing contact lens is superimposed over an entire face of the center support portion.

9. A hydrating case according to any one of claims 1-7, wherein a center depression is formed in a center portion of the containment recess so that a lens center is supported floating above the containment recess by the center depression.

10. A hydrating case according to any one of claims 1-9, wherein both the concave bowed face and a bottom face of the depression have smooth, generally mirrored surfaces.

11. A hydrating case according to any one of claims 1-10, wherein a mating portion is formed in a rim of a mouth of the containment recess, and a cover is detachably attached by being mated with the mating portion.

12. A hydrating case according to claim 11, wherein the cover has a tube through-hole formed therein, and a supply tube for supplying the hydrating liquid to the containment recess is inserted through the tube through-hole so that with the containment recess covered by the cover the hydrating liquid is supplied to the containment recess through the supply tube.

13. A hydrating case according to claim 11 or 12, wherein the mouth of the containment recess is provided with a liquid tight closure by the cover so as to constitute a distribution case in which the moisture-containing contact lens is sealed within the containment recess in a state of being immersed in a distribution storage liquid.

14. A hydrating device employing a hydrating case defined in any one of claims 1-13, for use to allow the moisture-containing contact lens in the dry state within the containment recess of the hydrating case to absorb water and swell, the hydrating device being **characterized by** comprising:
a flow tube set bordering a mouth of the containment recess in the hydrating case; and
a first injection port and a second injection port formed in the flow tube for supplying the hydrating liquid to the containment recess, the first injection port opening towards the concave inside face on a mouth side from the concave bowed face in the containment recess of the hydrating case, and the second injection port opening towards a back surface of the moisture-containing contact lens resting on the concave bowed face of the lens,
wherein a supply of the hydrating liquid through the first injection port and a supply of the hydrating liquid through the second injection port are independently controllable.

15. A hydrating device employing a hydrating case defined in any one of claims 1-13, for use to allow the moisture-containing contact lens in the dry state within the containment recess of the hydrating case to absorb water and swell, the hydrating device being **characterized by** comprising:
a flow tube set bordering the mouth of the containment recess in the hydrating case; and
an injection port formed in the flow tube for supplying the hydrating liquid to the containment recess, the flow tube being inclined with respect to the hydrating case whereby an opening direction of the injection port is variable with respect to the containment recess, and being selectively positionable at either a first opening location at which the injection port opens towards the concave inside face on a mouth side from the concave bowed face in the containment recess of the hydrating case, and a second opening location at which the injection port opens towards a back surface of the moisture-containing contact lens resting on the concave bowed face of the lens.

16. A hydrating device according to claim 14 or 15, wherein a drain port opening into the containment recess is formed in the flow tube, the hydrating liquid supplied to the containment recess being sucked out through the drain port in order to drain the liquid from the containment recess.

17. A moisture-containing contact lens hydrating method employing a hydrating case defined in any one of claims 1-13, for use to allow the moisture-containing contact lens in the dry state within the containment recess of the hydrating case to absorb water and swell, the hydrating method being **characterized by** comprising:
a first injection step wherein the moisture-containing contact lens in the dry state is placed in the containment recess of the hydrating case, and with the front surface of the moisture-containing contact lens resting supported on the concave bowed face, the hydrating liquid is supplied along the concave inside face on the mouth side from the concave bowed face in the containment recess, whereby the hydrating liquid is made to enter the gap formed between the moisture-containing contact lens and the containment recess by means of the depression; and
a second injection step wherein after the first injection step, the hydrating liquid is supplied towards the back surface of the moisture-containing contact lens contained within the containment recess, whereby the moisture-containing contact lens is immersed in the hydrating liquid within the containment recess.

18. A moisture-containing contact lens hydrating method according to claim 17, wherein a hydrating liquid feed during the first injection step is 2 mL or less.

19. A moisture-containing contact lens hydrating method according to claim 17 or 18, wherein after the second injection step, a flow step in which more hydrating liquid is supplied continuously to the containment recess while draining the excess hydrating liquid from the containment recess at the same time is performed.

20. A moisture-containing contact lens hydrating method according to claim 19, wherein in the flow step, the flow rate produced through the containment recess by means of supplying and draining the hydrating liquid is varied in stepwise fashion.
